# EUROPÄISCHE PATENTSCHRIFT

(11) **EP 1 007 210 B1**
(45) Veröffentlichungstag und Bekanntmachung des Hinweises auf die Patenterteilung: **30.01.2002**
(21) Anmeldenummer: 98936431.0
(22) Anmeldetag: 18.07.1998
(51) Int. Cl.: B01J 38/00, B01D 53/86

(54) **VERFAHREN UND VORRICHTUNG ZUM BEHANDELN VON KERAMISCHEN BAUTEILEN**
METHOD AND DEVICE FOR TREATING CERAMIC COMPONENTS
PROCEDE ET DISPOSITIF POUR LE TRAITEMENT DE PIECES CERAMIQUES

(30) Priorität: 29.07.1997 DE 19732547; 21.11.1997 DE 19751713; 05.02.1998 DE 19804522
(43) Veröffentlichungstag der Anmeldung: 14.06.2000
(73) Patentinhaber: STEAG encotec GmbH, 45128 Essen (DE)
(72) Erfinder: GILGEN, Ralf, D-42555 Velbert (DE)
(86) Internationale Anmeldenummer: EP9804472
(87) Internationale Veröffentlichungsnummer: WO9906147

(56) Entgegenhaltungen:
- GB-A- 1 122 632
- US-A- 3 948 764
- PATENT ABSTRACTS OF JAPAN vol. 098, no. 008, 30. Juni 1998 & JP 10 057766 A (NKK CORP), 3. März 1998
- PATENT ABSTRACTS OF JAPAN vol. 098, no. 008, 30. Juni 1998 & JP 10 057762 A (NKK CORP), 3. März 1998
- PATENT ABSTRACTS OF JAPAN vol. 013, no. 362 (C-625), 14. August 1989 & JP 01 119343 A (ISHIKAWAJIMA HARIMA HEAVY IND CO LTD), 11. Mai 1989

## Beschreibung

Die Erfindung betrifft ein Verfahren nach dem Oberbegriff des Patentanspruchs 1 sowie eine Vorrichtung nach dem Oberbegriff des Patentanspruchs 11.

Die Erfindung wird im folgenden anhand von keramischen Katalysatoren erläutert, wie sie in Stickstoffoxid-Minderungsanlagen Verwendung finden. Anwendbar hingegen ist die Erfindung überall dort, wo keramische Bauteile gereinigt und behandelt werden sollen, die durch Staubablagerungen verunreinigt sind.

Die Abgase von Kraftwerken, Müllverbrennungsanlagen und dergleichen müssen gereinigt werden, bevor sie in die Atmosphäre abgegeben werden können. In den Reinigungsprozeß ist eine Entstickungsstufe integriert, in der NOₓ unter Beigabe von Ammoniak reduziert wird, und zwar in Anwesenheit von Katalysatoren. Diese senken die Reaktionstemperatur und beschleunigen den Reduktionsprozeß. Sie bestehen aus keramischem Material, dessen Hauptkomponente Titandioxid ist. Das katalytisch aktive Material ist Vanadiumpentoxid oder Wolframtrioxid.

Die Katalysatoren bestehen aus sogenannten Katalysatorelementen, die als langgestreckte Wabenkörper ausgebildet sind und separate, parallele Strömungskanäle mit rechteckigem, meist quadratischem Querschnitt bilden. Die Katalysatorelemente werden zu Modulen zusammengefaßt, wobei jedes Modul einen Stahlrahmen aufweist, in den die Katalysatorelemente parallel zueinander eingesteckt werden.

Beispielsweise verfügt das Kraftwerk Bergkamen A (elektrische Leistung 750 MW) über zwei Entstickungsreaktoren, die mit insgesamt 41.472 Katalysatorelementen bestückt sind, von denen jedes Außenabmaße von 150 x 150 x 840 mm besitzt. Das Gesamtgewicht der Katalysator-Module beträgt 800 t.

Die Standzeit der Katalysatoren ist nicht unbegrenzt. Vielmehr kommt es zu einer Desakcivierung, wobei sich schadstoffhaltige Staubpartikel an den Katalysatorwänden absetzen. Wie schnell dies geschieht, hängt davon ab, an welcher Stelle des Abgasreinigungsprozesses die Entstickung vorgenommen wird. Am günstigsten unter diesem Gesichtspunkt ist eine Anordnung hinter der Rauchgasentschwefelungsanlage, jedoch reicht hier die Abgastemperatur nicht aus, um die Katalysatoren auf die Reaktionstemperatur aufzuheizen. Hierbei ist also eine Wiederaufheizung der Abgase erforderlich. Insoweit günstigere Verhältnisse finden sich in Kesselnähe stromauf des Luftvorwärmers. Dabei handelt es sich um die sogenannte High-Dust-Schaltung, bei der allerdings auch der Verschmutzungsgrad der Katalysatorelemente am höchsten ist.

Durch periodische Zwischenreinigungen läßt sich die Standzeit der Katalysatoren verlängern. Hierzu verwendet man bisher sogenannte Rußbläser in Form von Traversenbläsern, die in die Stickstoffoxid-Minderungsanlagen integriert sind. Sie bestehen aus Düsenstöcken, die über die Katalysatoren geführt werden und heißen Dampf in die Katalysatorelemente einblasen. Die Traversenbläser stellen einen erheblichen vorrichtungstechnischen Aufwand dar. Ferner läßt auch die Wirksamkeit der Reinigung zu wünschen übrig, da die Blasenergie schon nach wenigen Zentimetern verbraucht ist. Schließlich sind die Katalysatorelemente verbraucht und müssen ausgetauscht werden.

Die Behandlung der verbrauchten keramischen Katalysatoren stellt ein wesentliches Problem dar. Die Katalysatoren werden vermahlen, woraufhin grundsätzlich die Möglichkeit besteht, das keramische Material zu reinigen und erneut als Grundstoff für die Herstellung von Katalysatoren einzusetzen. Allerdings ist die Reinigung außergewöhnlich aufwendig, weil bei dieser Art der Wiederverwendung die chemischen Eigenschaften des Materials die wesentliche Rolle spielen. Außerdem wird das Material nicht erneut gebrannt, sondern lediglich bei ca. 900°C kalziniert, und erhält damit eine Festigkeit, die geringer ist als die von gebrannter Keramik. Die bisher gängige Alternative besteht daher darin, die verbrauchten und vermahlenen Katalysatoren in verunreinigtem Zustand auf Deponien zu entsorgen oder als Zusatzstoff einer Schmelzkammerfeuerung eines Kohlekraftwerks zuzuführen.

Ein Verfahren und eine Vorrichtung der eingangs genannten Art sind aus der GB-A-1 122 632 bekannt. Dort wird das Abgas durch ein in einer Kammer angeordnetes Bett aus granuliertem Katalysatormaterial hindurchgeleitet. Das Bett aus Katalysatormaterial wird von einem Vibrator gerüttelt, und der herausfallende Staub wird in einem Trichter gesammelt und über einen Förderer geführt.

Der Erfindung liegt die Aufgabe zugrunde, die Behandlung und Reinigung der keramischen Bauteile einfacher und effektiver zu gestalten.

Die erfindungsgemäße Lösung dieser Aufgabe erfolgt verfahrenstechnisch durch die Merkmale des Patentanspruchs 1 und vorrichtungstechnisch durch die Merkmale des Patentanspruchs 11.

Die Erzeugung von Gasschwingungen benötigt einen geringen baulichen Aufwand und kann in vorhandene Anlagen einfach integriert werden. Ferner kann mittels Gasschwingungen in wirtschaftlicher Weise eine sehr hohe Reinigungswirkung erreicht werden.

Die Behandlung kann als Zwischenreinigung innerhalb der Stickstoffoxid-Minderungsanlage erfolgen, wobei der vorrichtungstechnische Aufwand gering ist. Die intensive Reinigungswirkung ermöglicht eine deutliche Verlängerung der gesamten Standzeit der Katalysatoren. Das Sammeln der abgelösten Staubablagerungen erfolgt in einem nachgeschalteten Elektrofilter.

Das Verfahren eignet sich gleichermaßen zum Behandeln von verbrauchten keramischen Katalysatoren, die sich durch eine Zwischenreinigung nicht mehr reaktivieren lassen. Auf begrenztem Raum erfolgt ein hoher Energieentrag mit entsprechend hoher Reinigungsleitung. Die Katalysatoren werden so intensiv gereinigt, daß ihr Material nach anschließendem Vermahlen überall dort in der keramischen Industrie eingesetzt werden kann, wo die chemischen Eigenschaften des Materials keine Rolle spielen. Der zur Verfügung stehende Einsatzbereich ist sehr umfangreich. Das hochwertige keramische Material läßt sich also erneut wirtschaftlich nutzen und geht nicht ersatzlos verloren. Betrachtet man, wie oben anhand des Kraftwerks Bergkamen A dargestellt, die anfallenden Mengen, so wird der beträchtliche Kostenvorteil augenfällig.

Die gesammelten abgelösten Staubablagerungen können auf einer Deponie entsorgt oder einer Schmelzkammerfeuerung zugeführt werden.

Ferner ist es besonders vorteilhaft, die Gasschwingungen im niederfrequenten Schallbereich, vorzugsweise im Infraschallbereich zu erzeugen. Hier lassen sich mit relativ geringem Energieaufwand relativ große Schwingungsamplituden erzeugen. Die Gassäulen innerhalb der Katalysatorelemente werden also entsprechend heftig bewegt. Im übrigen breitet sich der Infraschall nach allen Richtung hin gleichmäßig aus, so daß also ein hohes Maß an konstruktiver Freiheit gewährt wird. Als bevorzugt haben sich Frequenzen von ca. 25 Hz erwiesen. Es hat sich gezeigt, daß die angestrebte Wirkung mit steigender Frequenz nachläßt, wobei allerdings Frequenzen im Bereich von ca. 100 Hz durchaus praktikabel sind. Der Resonanzbereich der Entstickungsanlagen liegt bei 60 bis 70 Hz und sollte selbstverständlich vermieden werden.

Die Gasschwingungen werden vorteilhafterweise von einem Schwingungsgeber erzeugt. In der Stickstoffoxid-Minderungsanlage überlagern sie sich mit der Strömung des zu reinigenden Gases.

Als Alternative wird in Weiterbildung der Erfindung vorgeschlagen, die Katalysatoren mit mindestens einem pulsierenden Gasstrom anzublasen. Dies entspricht der Arbeitsweise einer Sirene, wobei der Gasstrom als solcher in der Lage ist, die Reinigungswirkung zu fördern.

Grundsätzlich kann unterschieden werden zwischen der Reinigung der ausgebauten Katalysatorelemente und der periodischen Zwischenreinigung innerhalb der Entstickungsanlage. Im erstgenannten Fall ergibt sich eine sehr intensive Reinigungswirkung. Im letztgenannten Fall werden die noch nicht fest auf den Katalysatorflächen abgelagerten Partikel gelockert und mit dem Gasstrom ausgetragen. Es handelt sich also mehr um einen Vorgang der Reinhaltung als um eine intensive Reinigung, wie sie im Falle verbrauchter Katalysatoren zur Anwendung kommt.

Es wurde gefunden, daß die niederfrequente Beschallung von im Einsatz befindlichen Katalysatoren einen ganz besonders vorteilhaften Nebeneffekt mit sich bringt, nämlich eine Steigerung der katalytischen Wirksamkeit. Dieser Effekt ist darauf zurückzuführen, daß die laminare Grenzschicht an den Katalysatorflächen aufgerissen und in eine turbulente Strömung umgewandelt wird. Dies geschieht unter der Wirkung der Vibrationen der wandernden Gassäule. Außerdem werden die vom Gas transportierten Partikel in die Grenzschicht hineingeschleudert, wobei sie zu deren Verwirbelung beitragen. Insgesamt ergibt sich eine Beschleunigung der Stoffaustauschvorgänge. Ammoniak und Stickoxide treffen mit höherer Rate auf die Katalysatorflächen, so daß sich deren Effektivität erhöht.

Die Erfindung macht sich diese Vorgänge zu Nutze und schlägt vor, die Katalysatoren während ihres Einsatzes kontinuierlich zu beschallen. Dabei ist es besonders vorteilhaft, mit der kontinuierlichen Beschallung nach einer Mehrzahl von periodischen Beschallung zu beginnen.

Sind die Katalysatoren frisch im Einsatz, so besteht häufig keine Veranlassung, ihre Effektivität zu erhöhen. Erst wenn die katalytische Wirksamkeit um ein bestimmtes Maß abgesunken ist, beginnt man mit der Beschallung, und zwar anfänglich mit einer periodischen Beschallung. Die dabei erzielte Abreinigung läßt die katalytische Wirksamkeit wieder ansteigen. Hat die Deaktivierung der Katalysatoren ein bestimmtes Maß erreicht, bei dem die Reinigungswirkung alleine nicht mehr genügt, so setzt die kontinuierliche Beschallung ein. Die in ihrer Wirksamkeit lediglich geschädigten Bereiche der Katalysatorflächen erfahren eine so starke Steigerung der Effektivität, daß sich die Standzeit der Katalysatoren deutlich erhöht. Häufig läßt sich ein vorzeitiges Abschalten der Anlage bis zur nächsten Wartung hinausschieben.

Werden die verbrauchten Katalysatoren außerhalb der Stickstoffoxid-Minderungsanlage behandelt, so ist es aus Umweltschutzgründen vorteilhaft, die mit staubförmigen Verunreinigungen beladene Umgebungsluft abzusaugen. Dabei kann in Weiterbildung der Erfindung die abgesaugte Umgebungsluft gereinigt werden, wobei die dabei anfallenden staubförmigen Verunreinigungen den gesammelten Staubablagerungen bei deren Abtransport beigegeben werden. Es erfolgt also eine komplette Entsorgung der aus den Katalysatoren herausgerüttelten Verunreinigungen, wobei diese bevorzugt in eine Schmelzkammerfeuerung eingegeben und und zu Granulat eingeschmolzen werden können.

Besonders vorteilhaft ist es, die Katalysatoren modulweise zu behandeln. Wenn die Katalysatoren aus den Modulen herausgedrückt werden, sind sie also bereits gereinigt. Dies war bisher nicht der Fall, so daß erhebliche Staubmengen beim Auflösen der Module frei wurden.

Die erfindungsgemäße Vorrichtung eignet sich ausschließlich für die Behandlung verbrauchter keramischer Bauteile und deren Reinigung als Vorstufe für die Vermahlung und die anschließende Abgabe des keramischen Materials an die keramische Industrie.

Der Infraschallgeber kann als Schwingungsgeber ausgebildet sein, oder aber als Sirene, die einen pulsierenden Luftstrom erzeugt. Die Kammer ist so bemessen, daß sie jeweils ein mit Katalysatoren bestücktes Modul aufnimmt. Dieses wird dabei derart auf den schwingfähigen Siebboden aufgesetzt, daß die Strömungskanäle vertikal ausgerichtet sind. Am Modul oder am Siebboden greift der vorzugsweise pneumatisch betriebene Vibrator an. Durch das heftige Rütteln, das vorzugsweise mit hoher Amplitude und geringer Frequenz durchgeführt wird, fällt der Staub nach unten durch den Siebboden hindurch und gelangt auf den ersten Förderer. Dieser transportiert ihn zur Übergabestation, wo er gesammelt wird und vom zweiten Förderer erfaßt werden kann. Der zweite Förderer ist gekapselt und führt aus der Kammer heraus zu dem auswechselbaren Aufnahmebehälter. Sobald dieser gefüllt ist, wird er abtransportiert und durch einen leeren Aufnahmebehälter ersetzt.

Die Reinigungswirkung der Vorrichtung ist sehr intensiv und schafft die Möglichkeit dafür, das Material der anschließend vermahlenen Katalysatoren der Keramikindustrie zuzuführen.

Als erster Förderer eignet sich besonders gut ein Bandförderer und als zweiter Förderer ein in einer Umhüllung arbeitender Schneckenförderer. Die Kammer schützt die Atmosphäre gegen den aus den Katalysatoren herausgerüttelten Staub. Das Innere der Kammer hingegen ist stark mit schwermetallhaltigem, toxischem Staub belastet. Daher wird vorgeschlagen, an der Kammer ein mit einer Trenneinrichtung verbundenes Sauggebläse anzuordnen. Auf diese Weise wird die staubbeladene Luft aus der Kammer abgesaugt und von den Staubpartikeln gereinigt. Sofern die Trenneinrichtung, wie es ferner vorteilhaft ist, bei geschlossener Kammer mit ihrem Staubauslaß mit dem ersten Förderer in Verbindung steht, kann der aus der Abluft stammende Staub mit dem durch den Siebboden hindurchgefallenen Staub zusammengeführt und gemeinsam mit diesem abgefördert und entsorgt werden.

In wesentlicher Weiterbildung der Erfindung wird vorgeschlagen, daß die Kammer eine horizontal verschiebbare Haube aufweist. Zum Öffnen der Kammer wird die Haube zur Seite geschoben. Nach der Entnahme eines gereinigten Moduls und dem Aufsetzen eines ungereinigt Moduls auf den Siebboden wird die Haube wieder zurückgeschoben und die Kammer sodann geschlossen. Die Handhabung der Vorrichtung ist also sehr einfach.

Dabei ist es besonders vorteilhaft, die Trenneinrichtung an der Haube zu befestigen. Sobald die Haube in ihre Schließstellung geschoben worden ist, steht der Staubauslaß der Trenneinrichtung automatisch mit dem ersten Förderer in Verbindung.

Ferner ist es sehr vorteilhaft, die Vorrichtung mit einem Fahrwerk zu versehen und dadurch einen mobilen Einsatz zu ermöglichen. Damit besteht die Möglichkeit, die Katalysatormodule unmittelbar nach dem Ausbau aus der DeNoₓ-Anlage auf dem Gelände des jeweiligen Kraftwerks zu reinigen. Es entfällt also die sonst notwendige staubdichte Verpackung der Module.

Die Erfindung wird im folgenden anhand eines bevorzugten Ausführungsbeispiels einer Reinigungsvorrichtung im Zusammenhang mit der beiliegenden Zeichnung näher erläutert. Die Zeichnung zeigt in:

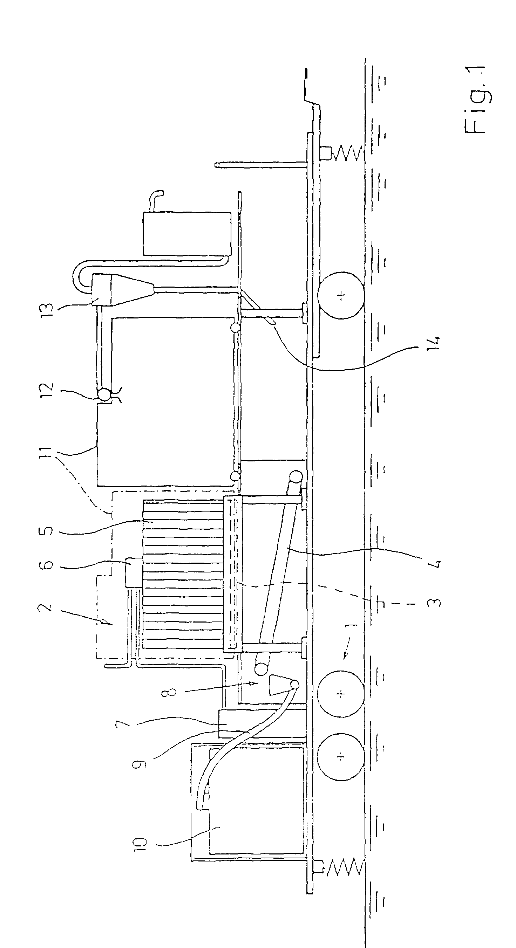

Fig. 1 eine schematische Seitenansicht einer Reinigungsvorrichtung.

Die Vorrichtung weist ein Fahrwerk 1 auf und gestattet daher einen mobilen Einsatz.

Kernstück der Vorrichtung ist eine Kammer 2, die einen schwingfähig gelagerten Siebboden 3 sowie unterhalb des Siebbodens einen ersten Förderer 4 in Form eines Förderbandes enthält. Auf den Siebboden 3 ist ein Modul 5 aufgesetzt, bescehend aus einer Mehrzahl verbrauchter keramischer Katalysatoren, deren Strömungskanäle vertikal ausgerichtet sind. Am Modul 5 greift ein pneumatisch betätigter Vibrator 6 an, der von einem Kompressor 7 gespeist wird.

Bei geschlossener Kammer 2 führt eine Betätigung des Vibrators 6 zu heftigen Rüttelbewegungen des Moduls 5. Dabei fällt der toxische Staub durch den Siebboden 3 hindurch auf den ersten Förderer 4 und wird von diesem zu einer Übergabestation 8 transportiert. Ein gekapselter zweiter Förderer 9, im vorliegenden Falle ein Schneckenförderer, entnimmt den Staub aus der Übergabestation 8 und transportiert ihn in einen Aufnahmebehälter 10. Ist dieser gefüllt, wird er gegen einen leeren Aufnahmebehälter ausgetauscht.

Die Kammer 2 weist eine Haube 11 auf, die in horizontaler Richtung verschieblich ist. In Fig. 1 nimmt die Haube 11 ihre nach rechts verschobene Position ein, in der die Kammer 2 geöffnet ist. Zum Schließen der Kammer 2 wird die Haube 11 nach links verschoben, wie es in strichpunktierten Linien angedeutet ist.

An der Haube 11 ist ein Sauggebläse 12 mit einer Trenneinrichtung 13 befestigt. Die Trenneinrichtung 13 ist im vorliegenden Fall als Zyklon mit einem nach unten gerichteten und abgewinkelten Staubauslaß 14 ausgebildet. Während des Betriebes fördert das Sauggebläse 12 die mit toxischem Staub beladene Luft aus der Kammer 2 durch die Trenneinrichtung 13, wobei sich deren Staubauslaß 14 oberhalb des ersten Förderers 4 befindet.

Die Vorrichtung gestattet eine gleichzeitige und sorgfältige Reinigung sämtlicher Katalysatoren, die das Modul enthält. Die Katalysatoren werden anschließend aus dem Modul herausgedrückt, wobei keine Staubbelastung der Umgebung zu befürchten ist. Sodann werden die Katalysatoren vermahlen. Der Reinheitsgrad des keramischen Materials genügt den Anforderungen der keramischen Industrie überall dort, wo die chemischen Eigenschaften keine Rolle spielen und vor allem keine aktiven katalytischen Eigenschaften erforderlich sind. Das Material kann also einer sinnvollen und wirtschaftlichen Weiterverwendung zugeführt werden.

Im Rahmen der Erfindung sind durchaus Abwandlungsmöglichkeiten gegeben. So kann die Kammer anstelle der Haube mit einem Klappdeckel versehen sein, der das Ein- und Ausladen eines Moduls gestattet. Als Trenneinrichtung kommen auch abreinigbare Filter infrage. Ferner können die beiden Förderer anders gestaltet sein. Für die Erzeugung der Rüttelbewegung hat es sich als vorteilhaft erwiesen, den Vibrator am Modul angreifen zu lassen. Möglich ist es jedoch auch, die Rüttelbewegung in den Siebboden einzuleiten, wobei das Modul dann mit letzterem fest verbunden ist.

Anstelle der Rüttelbewegung kann auch mit Infraschall gearbeitet werden. Dabei wird der Vibrator durch einen Infraschallgeber ersetzt. Ferner entfällt die Notwendigkeit, den Siebboden schwingfähig zu lagern. Der Infraschallgeber arbeitet mit einer Frequenz von ca. 25 Hz.

Als Infraschallgeber kommt ein Schwingungsgeber oder aber auch eine Infraschall-Sirene in Frage.

Derartige Infraschallgeber lassen sich ferner in Stickstoffoxid-Minderungsanlagen anordnen, um Zwischenreinigungen der Katalysatoren durchzuführen.

## Patentansprüche

1. Verfahren zum Behandeln von durch Staubablagerungen verunreinigten keramischen Bauteilen, insbesondere von verunreinigten keramischen Entstickungskatalysatoren, wobei zwischen den keramischen Bauteilen und der umgebenden Atmosphäre Relativschwingungen erzeugt werden, die die Staubablagerungen von den keramischen Bauteilen ablösen, und wobei die abgelösten Staubablagerungen gesammelt und zur Entsorgung oder Weiterverwertung abtransportiert werden,
**dadurch gekennzeichnet**
**daß** die Relativschwingungen als Gasschwingungen in der umgebenden Atmosphäre erzeugt werden.

2. Verfahren nach Anspruch 1, **dadurch gekennzeichnet, daß** die Gasschwingungen im niederfrequenten Schallbereich, vorzugsweise im Infraschallbereich erzeugt werden.

3. Verfahren nach Anspruch 1 oder 2, **dadurch gekennzeichnet, daß** die Gasschwingungen von einem Schwingungsgeber erzeugt werden.

4. Verfahren nach Anspruch 1 oder 2, **dadurch gekennzeichnet, daß** die keramischen Bauteile mit mindestens einem pulsierenden Gasstrom angeblasen werden.

5. Verfahren nach einem der Ansprüche 2 bis 4, **dadurch gekennzeichnet, daß** die keramischen Bauteile während ihres Einsatzes kontinuierlich beschallt werden.

6. Verfahren nach Anspruch 5, **dadurch gekennzeichnet, daß** mit der kontinuierlichen Beschallung nach einer Mehrzahl von periodischen Beschallungen begonnen wird.

7. Verfahren nach einem der Ansprüche 1 bis 6, **dadurch gekennzeichnet, daß** die mit staubförmigen Verunreinigungen beladene Umgebungsluft abgesaugt wird.

8. Verfahren nach Anspruch 7, **dadurch gekennzeichnet, daß** die abgesaugte Umgebungsluft gereinigt wird und daß die dabei anfallenden staubförmigen Verunreinigungen den gesammelten abgelösten Staubablagerungen bei deren Abtransport beigegeben werden.

9. Verfahren nach einem der Ansprüche 1 bis 8, dadurch geke nnzeichnet, daß die keramischen Bauteile modulweise behandelt werden.

10. Verfahren nach einem der Ansprüche 1 bis 9, **dadurch gekennzeichnet, daß** die keramischen Bauteile nach ihrer Reinigung vermahlen werden und daß das vermahlene keramische Material als Rohstoff der Keramikindustrie zugeführt wird.

11. Vorrichtung zum Reinigen von durch Staubablagerungen verunreinigten keramischen Bauteilen, insbesondere von verunreinigten keramischen Entstickungskatalysatoren, mit
- einer verschließbaren Kammer (2),
- einem innerhalb der Kammer (2) angeordneten Siebboden (3),
- einem innerhalb der Kammer (2) unterhalb des Siebbodens (3) angeordneten ersten Förderer (4), und
- einer Einrichtung zum Erzeugen von Relativschwingungen zwischen dem Siebboden und der Atmosphäre der Kammer,
**dadurch gekennzeichnet,**
- **daß** der erste Förderer (4) zu einer innerhalb der Kammer (2) angeordneten Übergabestation (8) führt,
- **daß** ein gekapselter zweiter Förderer (9), ausgehend von der Übergabestation (8), zu einem außerhalb der Kammer (2) angeordneten, auswechselbaren Aufnahmebehälter (10) führt und
- **daß** innerhalb der Kammer (2) ein Infrarschallgeber angeordnet ist.

12. Vorrichtung nach Anspruch 11, **dadurch gekennzeichnet, daß** der erste Förderer (4) als Bandförderer ausgebildet ist.

13. Vorrichtung nach Anspruch 11 oder 12, **dadurch gekennzeichnet, daß** der zweite Förderer (9) als Schneckenförderer ausgebildet ist.

14. Vorrichtung nach einem der Ansprüche 11 bis 13, **dadurch gekennzeichnet, daß** an der Kammer (2) ein mit einer Trenneinrichtung (13) verbundenes Sauggebläse (12) angeordnet ist.

15. Vorrichtung nach Anspruch 14, **dadurch gekennzeichnet, daß** die Trenneinrichtung (13) bei geschlossener Kammer (2) mit ihrem Staubauslaß (14) mit dem ersten Förderer (4) in Verbindung steht.

16. Vorrichtung nach einem der Ansprüche 11 bis 15, **dadurch gekennzeichnet, daß** die Kammer (2) eine horizontal verschiebbare Haube (11) aufweist.

17. Vorrichtung nach Anspruch 16, **dadurch gekennzeichnet, daß** die Trenneinrichtung (13) an der Haube (11) befestigt ist.

18. Vorrichtung nach einem der Ansprüche 11 bis 17, **gekennzeichnet durch** ein einen mobilen Einsatz ermöglichendes Fahrwerk (1).

## Claims

1. Method of treating ceramic components contaminated by dust deposits, especially contaminated ceramic nitrogen-removing catalysers, wherein relative oscillations detaching the dust deposits from the ceramic components are produced between the ceramic components and the ambient atmosphere and wherein the detached dust deposits are collected and transported away for disposal or further processing, **characterised in that** the relative oscillations are produced as gas oscillations in the ambient atmosphere.

2. Method according to claim 1, **characterised in that** the gas oscillations are produced in the low-frequency sound range, preferably in the infrasound range.

3. Method according to claim 1 or 2, **characterised in that** the gas oscillations are produced by an oscillation transmitter.

4. Method according to claim 1 or 2, **characterised in that** the ceramic components blown against by at least one pulsating gas flow.

5. Method according to one of claims 2 to 4, **characterised in that** the ceramic components are continuously acoustically irradiated during their use.

6. Method according to claim 5, **characterised in that** the continuous acoustic irradiation is begun after a plurality of periodic acoustic irradiations.

7. Method according to one of claims 1 to 6, **characterised in that** the ambient air charged with the dust-like contaminants is sucked away.

8. Method according to claim 7, **characterised in that** the extracted ambient air is cleaned and the dust-like contaminants settling **in that** case are added to the collected, detached dust deposits during the transport thereof away.

9. Method according to one of claims 1 to 8, **characterised in that** the ceramic components are treated in modular manner.

10. Method according to one of claims 1 to 9, **characterised in that** the ceramic components are comminuted after cleaning thereof and that the comminuted ceramic material is supplied to the ceramics industry as raw material.

11. Device for cleaning ceramic components contaminated by dust deposits, especially contaminated ceramic nitrogen-removing catalysers, comprising
- a closable chamber (2),
- a sieve base (3) arranged within the chamber (2),
- a first conveyor (4) arranged within the chamber (2) below the sieve base (3) and
- a device for producing relative oscillations between the sieve base and the atmosphere of the chamber,
**characterised in that**
- the first conveyor (4) leads to a transfer station (8) arranged within the chamber (2),
- an encapsulated second conveyor (9) going out from the transfer station (8) leads to an exchangeable receiving container (10) arranged outside the chamber (2) and
- an infrasound transmitter is arranged within the chamber (2).

12. Device according to claim 11, **characterised in that** the first conveyor (4) is constructed as a belt conveyor.

13. Device according to claim 11 or 12, **characterised in that** the second conveyor (9) is constructed as a worm conveyor.

14. Device according to one of claims 11 to 13, **characterised in that** a suction fan (12) connected with a separating device (13) is arranged at the chamber (2).

15. Device according to claim 14, **characterised in that** the separating device (13) is connected by its dust outlet (14) with the first conveyor (4) when the chamber (2) is closed.

16. Device according to one of claims 11 to 15, **characterised in that** the chamber (2) has a horizontally displaceable hood (11).

17. Device according to claim 16, **characterised in that** the separating device (13) is fastened to the hood (11).

18. Device according to one of claims 11 to 17, **characterised by** a chassis (1) enabling mobile use.

## Revendications

1. Procédé de traitement de composants céramiques salis par des dépôts de poussière, notamment de catalyseurs de dénitruration céramiques salis, où sont produites entre les composants céramiques et l'atmosphère environnante des oscillations relatives qui détachent les dépôts de poussière des composants céramiques, et où les dépôts de poussière détachés sont recueillis et évacués en vue de l'élimination ou d'une utilisation ultérieure, **caractérisé en ce que** les oscillations relatives sont produites comme oscillations de gaz dans l'atmosphère environnante.

2. Procédé selon la revendication 1, **caractérisé en ce que** les oscillations de gaz sont produites dans la zone sonore baase fréquence, de préférence dans la zone infrasonore.

3. Procédé selon la revendication 1 ou 2, **caractérisé en ce que** les oscillations de gaz sont produites par un générateur d'oscillations.

4. Procédé selon la revendication 1 ou 2, **caractérisé en ce que** les composants céramiques sont soumis au soufflage d'au moins un flux de gaz pulsé.

5. Procédé selon l'une des revendications 2 à 4, **caractérisé en ce que** les composants céramiques, pendant leur utilisation, sont exposés continuellement à l'action des sons.

6. Procédé selon la revendication 5, **caractérisé en ce que** la sonorisation continue est démarrée après une multitude de sonorisations périodiques.

7. Procédé selon l'une des revendications 1 à 6, **caractérisé en ce que** l'air ambiant chargé des impuretés en forme de poussière est aspiré.

8. Procédé selon la revendication 7, **caractérisé en ce que** l'air ambiant aspiré est purifié et **en ce que** les impuretés en forme de poussière ainsi produites sont ajoutées aux dépôts de poussière détachés recueillis lors de l'évacuation de ceux-ci.

9. Procédé selon l'une des revendications 1 à 8, **caractérisé en ce que** les composants céramiques sont traitée par module.

10. Procédé selon l'une des revendications 1 à 9, **caractérisé en ce que** les composants céramiques, après leur nettoyage, sont broyés et **en ce que** le matériau céramique broyé est amené comme produit de départ à l'industrie céramique.

11. Dispositif de nettoyage de composants céramiques salis par des dépôts de poussière, notamment de catalyseurs de dénitruration céramiques salis, avec
- une chambre pouvant être fermée (2) ;
- un fond à tamis (3) disposé à l'intérieur de la chambre (2),
- un premier convoyeur (4) disposé à l'intérieur de la chambre (2) en dessous du fond à tamis (3) et
- une installation pour produire des oscillations relatives entre le fond à tamis et l'atmosphère de la chambre, **caractérisé**
**en ce que** le premier convoyeur (4) mène à un poste de transfert (8) disposé à l'intérieur de la chambre (2),
- **en ce qu'**un deuxième convoyeur encapsulé (9), en partant du poste de transfert (8), mène à un récipient de collecte échangeable (10) disposé à l'extérieur de la chambre (2), et
- **en ce qu'**il est disposé à l'intérieur de la chambre (2) un générateur d'infrasons.

12. Dispositif selon la revendication 11, **caractérisé en ce que** le premier convoyeur (4) est réalisé comme convoyeur à bande.

13. Dispositif selon la revendication 11 ou 12, **caractérisé en ce que** le deuxième convoyeur (9) est réalisé comme convoyeur à vis.

14. Dispositif selon l'une des revendications 11 à 13, **caractérisé en ce qu'**il est disposé à la chambre (2) une soufflerie d'aspiration (12) reliée à une installation de séparation (13).

15. Dispositif selon la revendication 14, **caractérisé en ce que** l'installation de séparation (13), lorsque la chambre (2) est fermée, est en liaison avec sa sortie de poussière (14) avec le premier convoyeur (4).

16. Dispositif selon l'une des revendications 11 à 15, **caractérisé en ce que** la chambre (2) présente un capot (11) déplaçable horizontalement.

17. Dispositif selon la revendication 16, **caractérisé en ce que** l'installation de séparation (13) est fixée au capot (11).

18. Dispositif selon l'une des revendications 11 à 17, **caractérisé par** un mécanisme de roulement (1) permettant une utilisation mobile.
